(19) Europäisches Patentamt
European Patent Office
Office européen des brevets

(11) EP 2 285 905 B1

(12) # EUROPÄISCHE PATENTSCHRIFT

(45) Veröffentlichungstag und Bekanntmachung des Hinweises auf die Patenterteilung:
**25.07.2012 Patentblatt 2012/30**

(21) Anmeldenummer: **09735078.9**

(22) Anmeldetag: **17.04.2009**

(51) Int Cl.:
***C08L 69/00*** *(2006.01)*

(86) Internationale Anmeldenummer:
**PCT/EP2009/002811**

(87) Internationale Veröffentlichungsnummer:
**WO 2009/129962 (29.10.2009 Gazette 2009/44)**

(54) **SCHLAGZÄHMODIFIZIERTE POLYCARBONAT-ZUSAMMENSETZUNGEN MIT HOHER HYDROLYSEBESTÄNDIGKEIT UND HELLEM ROHTON**

IMPACT-MODIFIED POLYCARBONATE COMPOSITIONS HAVING HIGH HYDROLYSIS RESISTANCE AND A LIGHT NATURAL COLOUR

COMPOSITIONS POLYCARBONATE À RÉSILIENCE MODIFIÉE, À HAUTE RÉSISTANCE HYDROLYTIQUE ET À COULEUR NATURELLE CLAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.04.2008 DE 102008020437**

(43) Veröffentlichungstag der Anmeldung:
**23.02.2011 Patentblatt 2011/08**

(73) Patentinhaber: **Bayer MaterialScience AG**
**51368 Leverkusen (DE)**

(72) Erfinder:
- **AVTOMONOV, Evgeny**
**51373 Leverkusen (DE)**
- **SEIDEL, Andreas**
**41542 Dormagen (DE)**
- **ECKEL, Thomas**
**41540 Dormagen (DE)**
- **WENZ, Eckhard**
**50996 Köln (DE)**

(56) Entgegenhaltungen:
**EP-A1- 0 702 019**
**WO-A1-2004/050765**
**DE-A1- 19 632 701**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 285 905 B1

## Beschreibung

Die Erfindung betrifft mit einem speziell hergestellten und aufgearbeiteten Pfropfpolymerisat schlagzähmodifizierte thermoplastische Polycarbonat-Zusammensetzungen (Formmassen), ein Verfahren zu deren Herstellung sowie daraus hergestellte Formteile.

Thermoplastische Formmassen aus Polycarbonaten und ABS-Polymerisaten sind seit langem bekannt. So beschreibt DE-A 1 170 141 gut verarbeitbare Formmassen aus Polycarbonaten und Pfropfpolymerisaten von Monomermischungen aus Acrylnitril und einem aromatischen Vinylkohlenwasserstoff auf Polybutadien.

In der DE-A 1 810 993 wird die verbesserte Wärmestandfestigkeit von Polycarbonat in Abmischung mit ABS-Pfropfpolymerisaten bzw. Copolymerisaten auf Basis von $\alpha$-Methylstyrol hervorgehoben.

Gegenstand der DE-A 22 59 565 und DE-A 23 29 548 ist die verbesserte Fließnahtfestigkeit von PC/ABS-Formmassen, wobei in beiden Schriften als Bestandteil der ABS-Komponente jeweils Pfropfpolymerisate bestimmter Teilchengröße verwendet werden. Aus der EP-A 0 704 488 sind thermoplastische Formmassen mit einem Teilchendurchmesser von 0,20 bis 0,35 $\mu$m bekannt.

Die DE-A 28 18 679 lehrt, dass PC/ABS-Mischungen dann besonders hohe Tieftemperaturzähigkeiten aufweisen, wenn das ABS-Polymerisat zwei Pfropfmischpolymerisate mit unterschiedlichem Pfropfgrad enthält.

Polycarbonat-Zusammensetzungen enthaltend Pfropfpolymerisate als Schlagzähmodifikatoren können darüber hinaus abhängig von der Reinheit und Additivierung des Schlagzähmodifikators, z.B. ABS (Acrylnitril-Butadien-Styrol-Terpolymer), unterschiedliche Stabilität gegenüber Hydrolyse und thermische Belastung aufweisen. So werden von B.S. Patty, L. Novak und H. Phan (in "Thermal and hydrolytic stability of polycarbonate/acrylonitrile-butadiene-styrene based blends", Society of Automotive Engineers, [Special Publication] SP (2005), SP-1960 (Advances in Plastic Components, Processes and Technologies), 145-151) Polycarbonat-Zusammensetzungen beschrieben, die für Masse-ABS als Modifikator eine deutlich bessere Hydrolysestabilität und thermische Stabilität aufweisen als im Falle von Emulsions-ABS als Modifikator. Dabei wird das unterschiedliche Verhalten der Polycarbonat/Masse-ABS-Zusammensetzungen gegenüber Polycarbonat/Emulsions-ABS-Zusammensetzungen darauf zurückgeführt, dass das Herstellverfahren für Emulsions-ABS gegenüber Masse-ABS eine höhere Anzahl an verschiedenen Chemikalien als Hilfsmittel benötigt, wie z.B. Emulgatoren, Fliessverbesserer, Stabilisatoren, Salze etc., wobei unter diesen Chemikalien auch solche enthalten sind, die zur Zersetzung des Polycarbonats führen können. Ein weiterer Vorteil der Polycarbonat/Masse-ABS-Zusammensetzungen ist eine besonders helle Eigenfarbe (Rohton), die sich auf die Einfärbung der Formkörper bestehend aus solchen Zusammensetzungen besonders günstig auswirkt.

Bestimmte Polycarbonat-Zusammensetzungen enthaltend Emulsions-Pfropfpolymerisate als Schlagzähmodifikator weisen gegenüber Polycarbonat-Zusammensetzungen enthaltend Masse-ABS einige technische Vorteile auf, z.B. hinsichtlich der Oberflächenbeschaffenheit (Glanzgrad), so dass es für einige Anwendungen vorteilhaft ist, Emulsions-Pfropfpolymerisate einzusetzen. Ist eine hohe Hydrolysestabilität gefordert, so muss man hohe Anforderungen an die eingesetzten Emulsions-Pfropfpolymerisate stellen, wie z.B. hinsichtlich deren Reinheit, des Aufarbeitungsverfahrens bei deren Herstellung und eines Verzichts auf bestimmte Hilfsmittel bei deren Herstellung.

Beispielsweise sind aus EP-A 0 900 827 schlagzähmodifizierte Polycarbonat-Zusammensetzungen mit verbesserter Thermostabilität enthaltend Emulsions-Pfropfpolymerisate bekannt, welche im Wesentlichen frei von Komponenten sind, die das Polycarbonat abbauen. Um ein Emulsions-Pfropfpolymerisat im Wesentlichen frei von Komponenten zu erhalten, die das Polycarbonat abbauen, muss man auf solche Komponenten im Emulsionsverfahren in jeder Verfahrensstufe völlig verzichten oder die hergestellten Emulsions-Pfropfpolymerisate durch ein entsprechendes Aufarbeitungsverfahren von diesen Komponenten komplett befreien, z.B. durch das Waschen nach der Koagulation der Pfropfemulsion. Insbesondere muss man auf die Verwendung von carboxylat-haltigen Hilfsstoffen (z.B. Emulgatoren, Pufferlösungen etc.) verzichten, da diese Polycarbonat abbauen. Die aus EP-A 0 900 827 bekannten Polycarbonat-Zusammensetzungen enthalten Emulsions-Pfropfpolymerisate des MBS und ABS-Typs, die unter Verwendung von Sulfat- und/oder Sulfonat-haltigen Emulgatoren hergestellt wurden. Diese Emulgatoren führen häufig zu unerwünschten Verfärbungen der Formmassen.

Aus der WO-A 99/01489 sind Emulsions-Pfropfpolymerisate vom ABS-Typ bekannt, welche mittels verschiedenster Emulgatoren hergestellt werden. Unter anderem werden für deren Herstellung gängige carboxylat-haltige Emulgatoren als mögliche Emulgatoren erwähnt. Diese Patentschrift lehrt auch, wie man besonders helle ABS-Formmassen herstellen kann, bei denen die Verarbeitung und der Acrylnitrilgehalt im Pfropfpolymerisat und in der Matrixkomponente (SAN-Harz) eine besonders wichtige Rolle spielen. Aus WO-A 99/01489 geht es vor allem hervor, dass die Zusammensetzungen enthaltend Emulsions-ABS sich besonders zur Vergilbung bis hin zur Verbräunung neigen. Diese Vergilbung bzw. Verbräunung zeichnen sich durch den Gelbindex (Yellowness Index) von grösser 30 bis weit über 50 aus. Dabei hängt der Yellowness Index von mehreren Faktoren ab, u.a. vom Kautschuk- und Acrylnitrilgehalt des ABS, von den Additiven in der Emulsionspolymerisation und bei der Aufarbeitung und ggf. von der Reinigung des Pfropfpolymerisats sowie von den Verarbeitungsbedingungen der Formmassen und Bedingungen bei der Herstellung von Formkörpern. Die Vergilbung bzw. Braunfärbung wird durch die hohen Temperaturen begünstigt, wie sie z.B. bei der Spritzgussverarbeitung oder bei der Abmischung mit Zusatzstoffen während Compoundierung auf einem Extruder auftreten.

WO-A 2004/050765 lehrt über die Bereitstellung von schlagzähmodifizierten Zusammensetzungen mit optimierter Eigenschaftskombination aus guter Oberflächenqualität (insbesondere eine sehr niedrige Zahl an Fehlstellen, sogenannter "Stippen"), gutem Fließverhalten und guter Spannungsrissbeständigkeit (ESC-Verhalten). Zur Lösung dieser Aufgabe wurden cogefällte Pfropfpolymerisate, hergestellt nach dem Verfahren der Emulsionspolymerisation, verwendet, bei denen mindestens ein Pfropfpolymerisat, hergestellt mittels einer Redox-Initiierung, mit mindestens einem weiteren Pfropfpolymerisat, hergestellt mittels eines anorganischen Persulfat-Initiators, auf der Latex-Stufe (d.h. als Polymer-Dispersion) vermischt, danach cogefällt und mit den Thermoplasten oder einer Mischung aus Thermoplasten, darunter Polycarbonate, Polyestercarbonate, Polyamide und Polyoxymethylen, schmelzecompoundiert werden. Die Verbesserung der Hydrolysestabilität und die Verbesserung der Eigenfarbe (des Rohtons) der hergestellten Zusammensetzungen, insbesondere derjenigen Zusammensetzungen, die Polycarbonat, Polyestercarbonat und Polyester enthalten, sind nicht durch die Lehre der WO-A 2004/050765 vermittelt.

Die Aufgabe der vorliegenden Erfindung ist die Bereitstellung von schlagzähmodifizierten Polycarbonat-Zusammensetzungen, die sich durch eine optimale Kombination aus einer guten Hydrolysebeständigkeit und einem hellen Rohton auszeichnen. Insbesondere war es Aufgabe der vorliegenden Erfindung, schlagzähmodifizierten Polycarbonat-Zusammensetzungen bereitzustellen, die sich durch eine optimale Kombination aus einer guten Hydrolysebeständigkeit und einem hellen Rohton unter Beibehaltung von guten Flammschutzeigenschaften (Bewertung von V-0 bei Wandstärken von 1,5 mm) auszeichnen..

Es wurde nun überraschend gefunden, dass Zusammensetzungen oder Formmassen enthaltend

A) ein aromatisches Polycarbonat und/oder aromatisches Polyestercarbonat,
B) ein Pfropfpolymerisat erhältlich durch Cofällung einer Mischung aus mindestens zwei Pfropfpolymerisat-Dispersionen, dadurch gekennzeichnet, dass die Herstellung der Pfropfpolymerisatkomponente B.1 unter Verwendung von mindestens einem Redox-System als Initiator und dass die Herstellung der Pfropfpolymerisatkomponente B.2 unter Verwendung von mindestens einer Persulfatverbindung als Initiator erfolgt,
C) gegebenenfalls Vinyl(Co)Polymerisat und/oder Polyalkylenterephthalat,
D) gegebenenfalls phosphorhaltiges Flammschutzmittel,
E) mindestens ein phenolisches Antioxidanz wobei die Zusammensetzungen frei sind von Stabilisatoren (Komponente E) und synergisten (Komponente F), die basische oder saure funktionelle Gruppen enthalten, und wobei die Zusammensetzung 0,01 bis 2 Gew.-Tle, jeweils bezogen auf die Komponenten A,B+C, neutrale phosphor- oder schwefelhaltige co-stabilisatoren enthält, die weder basische nach so saure funktionelle Gruppen enthalten, als Komponente F,
die erfindungsgemäße Aufgabe lösen.

Bevorzugt sind Zusammensetzungen enthaltend

A) 10 bis 99 Gew.-Tle., bevorzugt 40 bis 95 Gew.-Tle., besonders bevorzugt 50 bis 85 Gew.-Tle. aromatisches Polycarbonat und/oder aromatisches Polyestercarbonat,
B) 1 bis 50 Gew.-Tle., bevorzugt 4 bis 30 Gew.-Tle., besonders bevorzugt 12 bis 25 Gew.-Tle. eines Pfropfpolymerisats erhältlich durch Cofällung einer Mischung aus mindestens zwei Pfropfpolymerisat-Dispersionen B.1 und B. 2, dadurch gekennzeichnet, dass die Herstellung der Pfropfpolymerisatkomponente B.1 unter Verwendung von mindestens einem Redox-System als Initiator und dass die Herstellung der Pfropfpolymerisatkomponente B.2 unter Verwendung von mindestens einer Persulfatverbindung als Initiator erfolgt,
C) 0 bis 40 Gew.-Tle., bevorzugt 1 bis 30 Gew.-Tle., besonders bevorzugt 3 bis 25 Gew.-Tle. Vinyl(Co)Polymerisat und/oder Polyalkylenterephthalat,
D) 0 bis 50 Gew.-Tle., bevorzugt 2 bis 30 Gew.-Tle., besonders bevorzugt 10 bis 20 Gew.-Tle., jeweils bezogen auf die Summe der Gew.-Tle. der Komponenten A+B+C, phosphorhaltiges Flammschutzmittel,
E) 0,005 bis 1 Gew.-Tle., bevorzugt 0,01 bis 0,5 Gew.-Tle., besonders bevorzugt 0,02 bis 0,3 Gew.-Tle., jeweils bezogen auf die Summe der Gew.-Tle. der Komponenten A+B+C, mindestens eines phenolischen Antioxidanz,
F) 0,01 bis 2 Gew.-Tle., besonders bevorzugt 0,05 bis 0,5 Gew.-Tle. jeweils bezogen auf die Summe der Gew.-Tle. der Komponenten A+B+C, neutrale phosphor- oder schwefelhaltige Costabilisatoren (im Folgenden auch als Synergisten bezeichnet), und
G) 0 bis 50 Gew.-Tle., bevorzugt 0,5 bis 25 Gew.-Tle., jeweils bezogen auf die Summe der Komponenten A+B +C, Zusatzstoffe,

wobei alle Gewichtsteilangaben in der vorliegenden Anmeldung so normiert sind, dass die Summe der Gewichtsteile aller Komponenten A+B+C in der Zusammensetzung 100 ergeben.

Diese Bestandteile und weitere in den erfindungsgemäßen Zusammensetzungen einsetzbare Komponenten

werden anschließend beispielhaft erläutert.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

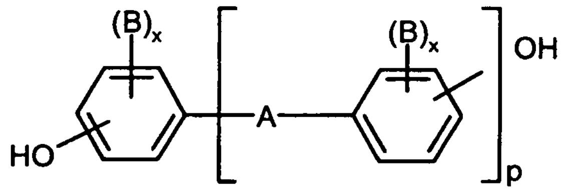

(I),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$ $C_6$ bis $C_{12}$-Arylen an das weitere aromatische gegebenenfalls Heteroatome enthaltende Ringe kondensiert sein können, oder ein Rest der Formel (II) oder (III)

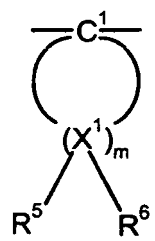

(II)

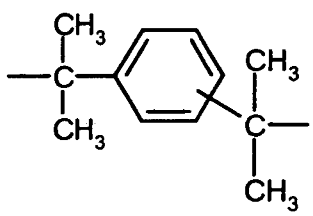

(III)

| | |
|---|---|
| B | jeweils $C_1$ bis $C_{12}$-Alkyl, vorzugsweise Methyl, Halogen, vorzugsweise Chlor und/oder Brom |
| x | jeweils unabhängig voneinander 0, 1 oder 2, |
| p | 1 oder 0 sind, und |
| $R^5$ und $R^6$ | für jedes $X^1$ individuell wählbar, unabhängig voneinander Wasserstoff oder $C_1$ bis $C_6$-Alkyl, vorzugsweise Wasserstoff, Methyl oder Ethyl, |
| $X^1$ | Kohlenstoff und |
| m | eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind. |

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1 -Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20: 1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol%, insbesondere bis zu 80 mol%, besonders bevorzugt bis zu 50 mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

## Komponente B

Die Komponente B ist ein Pfropfpolymerisat erhältlich durch Cofällung einer Mischung aus mindestens zwei Pfropfpolymerisat-Dispersionen B.1 und B.2, wobei B.1 und B.2 jeweils eine Polymerdispersion in Wasser von

i) 15 bis 60 Gew.-%, vorzugsweise 25 bis 60 Gew.-%, besonders bevorzugt 30 bis 50 Gew.-%, wenigstens eines Vinylmonomeren auf

ii) 85 bis 40 Gew.-%, vorzugsweise 75 bis 40 Gew.-%, besonders bevorzugt 70 bis 50 Gew.-% einer oder mehrerer Pfropfgrundlagen mit Glasübergangstemperaturen < 10°C, vorzugsweise < 0°C, besonders bevorzugt < -20°C

ist.

Die Pfropfgrundlage des mittels Cofällung erhältlichen Pfropfpolymerisats hat im allgemeinen eine mittlere Teilchengröße ($d_{50}$-Wert) von 0,05 bis 5 $\mu$m, vorzugsweise 0,1 bis 0,5 $\mu$m, besonders bevorzugt 0,2 bis 0,4 $\mu$m.

Monomere i) sind vorzugsweise Gemische aus

i1) 50 bis 99 Gew.-Tle. Vinylaromaten und/oder kemsubstituierten Vinylaromaten (wie beispielsweise Styrol, $\alpha$-Methylstyrol, p-Methylstyrol, p-Chlorstyrol) und/oder (Meth)Acrylsäure-($C_1$-$C_8$)-Alkylester (wie z.B. Methylmethacrylat, Ethylmethacrylat) und

i2) 1 bis 50 Gew.-Tle. Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere i1) sind ausgewählt aus mindestens einem der Monomere Styrol, $\alpha$-Methylstyrol und Methylmethacrylat, bevorzugte Monomere i2) sind ausgewählt aus mindestens einem der Monomere Acrylnitril, Maleinsäureanhydrid und Methylmethacrylat.

Besonders bevorzugte Monomere sind i1) Styrol und i2) Acrylnitril.

Für die Pfropfpolymerisate B.1 und B.2 geeignete Pfropfgrundlagen ii) sind beispielsweise Dienkautschuke, EP(D)M-Kautschuke, also solche auf Basis Ethylen/Propylen und gegebenenfalls Dien-Monomeren, weiterhin Acrylat-, Polyurethan-, Silikon-, Chloropren- und Ethylen/Vinylacetat-Kautschuke.

Bevorzugte Pfropfgrundlagen ii) sind Dienkautschuke. Unter Dienkautschuken im Sinne der vorliegenden Erfindung werden Dienkautschuke (z. B. auf Basis Butadien, Isopren etc.) oder Gemische von Dienkautschuken oder Copolymerisate von Dienkautschuken oder deren Gemische mit weiteren copolymerisierbaren Monomeren (z.B. gemäß i1) und i2)), bevorzugt Butadien-Styrol-Copolymere mit vorzugsweise bis zu 30 Gew.% Styrol, verstanden, mit der Maßgabe, dass die Glasübergangstemperatur der Komponente ii) <10°C, vorzugsweise <0°C, besonders bevorzugt < -20°C liegt.

Besonders bevorzugt ist reiner Polybutadienkautschuk.

Geeignete Acrylatkautschuke gemäß ii) der Polymerisate B.1 und B.2 sind vorzugsweise Polymerisate aus Acrylsäurealkylestern, gegebenenfalls mit bis zu 40 Gew.%, bezogen auf ii) anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5, insbesondere 0,05 bis 2 Gew.-%, bezogen auf die Pfropfgrundlage ii).

Bei cyclischen vernetzenden Monomeren mit mindestens drei ethylenisch ungesättigten Gruppen ist es vorteilhaft, die Menge auf unter 1 Gew.% der Pfropfgrundlage ii) zu beschränken.

Bevorzugte "andere" polymerisierbare, ethylenisch ungesättigte Monomere, die neben den Acrylsäureestern gegebenenfalls zur Herstellung der Pfropfgrundlage ii) dienen können, sind z. B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage ii) sind Emulsionspolymerisate, die einen Gelgehalt von mindestens 60 Gew.% aufweisen.

Weitere geeignete Pfropfgrundlagen gemäß ii) sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage ii) wird bei 25°C in einem geeigneten Lösungsmittel (z.B. Toluol) bestimmt (M. Hoffmann, H. Krömer, R. Kuhn, Polymeranalytik I und II, Georg Thieme-Verlag, Stuttgart 1977).

Die mittlere gewichtsgemittelte Teilchengröße $d_{50}$ ist der Durchmesser, oberhalb und unterhalb dessen jeweils 50 Gew.% der Teilchen liegen. Er kann mittels Ultrazentrifugenmessung (W. Scholtan, H. Lange, Kolloid-Z. und Z. Polymere 250 (1972), 782-796) bestimmt werden.

Besonders bevorzugte Polymerisate B.1 und B.2 sind z.B. ABS-Polymerisate (vorzugsweise durch Emulsionspolymerisation erzeugt), wie sie z. B. in der DE-A 2 035 390 (=US-A 3 644 574) oder in der DE-A 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage ii) beträgt im allgemeinen mindestens 30 Gew.%, vorzugsweise mindestens 40 Gew.% (in Toluol gemessen).

Bevorzugt sind Pfropfpolymerisate mit Kern-Schale-Struktur.

Die Pfropfcopolymerisate B.1 und B.2 werden durch radikalische Polymerisation in der Regel und vorzugsweise durch Emulsionspolymerisation hergestellt.

Dabei wird das erfindungsgemäß einzusetzende Pfropfpolymerisat B.1 durch Redox-Initiierung hergestellt.

Erfindungsgemäß geeignete Redoxinitiatorsysteme bestehen in der Regel aus einem organischen Oxidationsmittel und einem Reduktionsmittel, wobei im Reaktionsmedium zusätzlich Schwermetallionen vorhanden sein können; vorzugsweise wird ohne Schwermetallionen gearbeitet.

Erfindungsgemäß geeignete organische Oxidationsmittel sind beispielsweise und bevorzugt Di-tert.-butylperoxid, Cumolhydroperoxid, Dicyclohexylpercarbonat, tert.-Butylhydroperoxid, p-Menthanhydroperoxid oder Mischungen hieraus, besonders bevorzugt sind Cumolhydroperoxid und tert.-Butylhydroperoxid. An Stelle des organischen Oxidationsmittel kann auch $H_2O_2$ als Oxidationsmittel im Redoxinitiatorsystem verwendet werden.

Erfindungsgemäß einsetzbare Reduktionsmittel sind vorzugsweise wasserlösliche Verbindungen mit reduzierender Wirkung, vorzugsweise ausgewählt aus der Gruppe der Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit®C (Natriumformaldehydsulfoxylat), Mono- und Dihydroxyaceton, Zucker (z.B. Glucose oder Dextrose). Prinzipiell möglich ist auch die Verwendung von z.B. Eisen(II)-salzen wie z.B. Eisen(II)-sulfat, Zinn(II)-salzen wie z.B. Zinn(II)-chlorid, Titan (III)-salzen wie Titan(III)-sulfat; vorzugsweise werden jedoch keine derartigen Metallsalze verwendet.

Besonders bevorzugte Reduktionsmittel sind Dextrose, Ascorbinsäure(salze) oder Natriumformaldehydsulfoxylat (Rongalit® C).

Das erfindungsgemäß einzusetzende Pfropfpolymerisat B.2 wird durch Persulfat-Initiierung hergestellt.

Erfindungsgemäß geeignete Persulfat-Verbindungen sind Ammoniumperoxodisulfat, Kaliumperoxodisulfat, Natriumperoxodisulfat oder Mischungen daraus.

Herstellung der cogefällten Pfropfpolymerisate B.1 und B.2

Die Herstellung der erfindungsgemäß einzusetzenden Pfropfpolymerisate erfolgt durch Abmischung mindestens eines unter Verwendung von mindestens einer Persulfatverbindung als Initiator hergestellten Pfropfpolymerisats B.2 in Latex-Form mit mindestens einem unter Verwendung von mindestens einem Redox-System als Initiator hergestellten Pfropfpolymerisat B.1 in Latex-Form, homogener Vermischung der Latices und Aufarbeitung des resultierenden Pfropfpolymerisatmischproduktes unter Verwendung bekannter Verfahren.

Beispiele für geeignete Aufarbeitungsverfahren sind z.B. die Ausfällung der Pfropfpolymerisat-Dispersionsmischung durch Einwirkung von wässrigen Elektrolytlösungen wie z.B. Lösungen von Salzen (z.B. Magnesiumsulfat, Calciumchlorid, Natriumchlorid), Lösungen von Säuren (z.B. Schwefelsäure, Phosphorsäure, Essigsäure) oder deren Mischungen, Ausfällung durch Einwirkung von Kälte (Gefrierkoagulation) oder direkte Gewinnung des Cofällproduktes aus der Dispersionsmischung (dem Latex) durch Sprühtrocknung.

Im Falle der Ausfällung der Pfropfpolymerisat-Mischung schließen sich üblicherweise ein Waschschritt (vorzugsweise mit Wasser) und ein Trockenschritt (z.B. in einem Fließbetttrockner oder einem Stromtrockner) an.

Der pH-Wert der Komponente B weist im allgemeinen einen Wert von 3 bis 9, bevorzugt von 4 bis 8 und besonders bevorzugt von 5 bis 7 auf. Zur Bestimmung des pH-Wertes der Komponente B wird diese in frisch destilliertem Wasser zu einer 10%-igen (Gew.-%) Suspension aufgeschlämmt.

Die Pfropfpolymerisate B. und B.2 können in beliebigen Mischungsverhältnissen cogefällt werden. Vorzugsweise beträgt das Gew.-Verhältnis B.1:B.2 95:5 bis 5:95, besonders bevorzugt 90:10 bis 25:75 und ganz besonders bevorzugt 85:15 bis 50:50.

In einem alternativen Aufarbeitungsverfahren wird nach der Ausfällung das feuchte Pfropfpolymerisatgemisch mit einer Thermoplastharz-Schmelze (Komponente C) in einem Knetreaktor abgemischt. Einzelheiten dieses Aufarbeitungsverfahrens sind in der EP-A 867 463 beschrieben. Die nach diesem Aufarbeitungsverfahren erhaltenen Zusammensetzungen aus Pfropfpolymerisatgemisch und Thermoplastharz gemäß Komponente C können zur Herstellung der erfindungsgemäßen Formmassen eingesetzt werden. Das cogefällte Pfropfpolymerisat B liegt hierbei bevorzugt in dispergierter Form in einer Matrix aus Vinyl(co)polymerisat C.1 (insbesondere Styrol/Acrylnitril-Copolymerisat) vor. Dabei beträgt das Gew.-Verhältnis B : C.1 = 90 : 10 bis 10 : 90, vorzugsweise 80 : 20 bis 30 : 70 und besonders bevorzugt 70 : 30 bis 40 : 60.

Prinzipiell ist es auch möglich, die Polycarbonat oder Polyestercarbonatkomponente A, die durch Cofällung von B.1 und B.2 erhaltene Pfropfpolymerkomponente und die Vinyl(co)polymerisatkomponente C.1 und/oder Polyalkylenterephthalatkomponente C.2 sowie gegebenenfalls Additive in einem Compoundierschritt auf üblichen Compoundieraggregaten miteinander zu vermischen und dann mit den weiteren Komponenten, wie üblich zu mischen und weiter zu verarbeiten. Es ist weiterhin auch möglich, die Komponente B und C separat mit den übrigen Komponenten und Additiven zu mischen und weiter zu verarbeiten.

## Komponente C

Die Komponente C umfasst ein oder mehrere thermoplastische Vinyl(Co)Polymerisate C.1 und/oder Polyalkylenterephthalate C.2.

Geeignet sind als Vinyl(Co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)-Polymerisate aus

C.1.1 50 bis 99, vorzugsweise 60 bis 80 Gew.-Tle. Vinylaromaten und/oder kemsubstituierten Vinylaromaten wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

C.1.2 1 bis 50, vorzugsweise 20 bis 40 Gew.-Tle. Vinylcyanide (ungesättigte Nitrile) wie Acryl-nitril und Methacrylnitril und/oder (Meth)Acryl-säure-($C_1$-$C_8$)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate C.1 sind harzartig, thermoplastisch und kautschukfrei. Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.%, vorzugsweise mindestens 90 Gew.%, bezogen auf die Dicarbonsäurekomponente Terephthalsäurereste und mindestens 80 Gew.%, vorzugsweise mindestens 90 mol%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

<u>**Komponente D**</u>

Phosphorhaltige Flammschutzmittel (Komponente D) im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV)

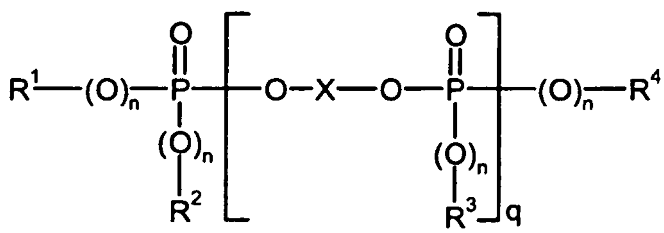

(IV)

worin

| | |
|---|---|
| $R^1$, $R^2$, $R^3$ und $R^4$, | unabhängig voneinander jeweils gegebenenfalls halogeniertes $C_1$ bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl, |
| n | unabhängig voneinander, 0 oder 1, |
| q | 0 bis 30 und |
| X | einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten. |

Bevorzugt stehen $R^1$, $R^2$, $R^3$ und $R^4$ unabhängig voneinander für $C_1$ bis $C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen,

vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (IV) kann, unabhängig voneinander, 0 oder 1 sein, vorzugsweise ist n gleich 1.

q steht für Werte von 0 bis 30, bevorzugt 0,3 bis 20, besonders bevorzugt 0,5 bis 10, insbesondere 0,5 bis 6, ganz besonders bevorzugt 1,1 bis 1,6.

X steht besonders bevorzugt für

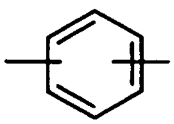 , 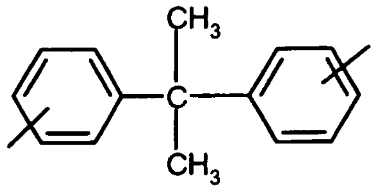 , 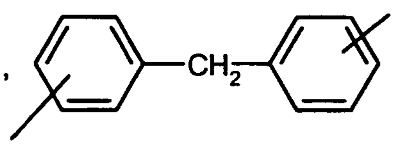 ,

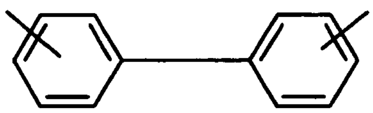 , 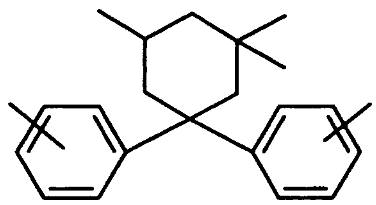

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente D können auch Mischungen verschiedener Phosphate eingesetzt werden.

Phosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (IV), die sich vom Bisphenol A ableiten, ist insbesondere bevorzugt.

Höchst bevorzugt als Komponente D ist die auf Bisphenol-A basierende Phosphorverbindung gemäß Formel (IVa).

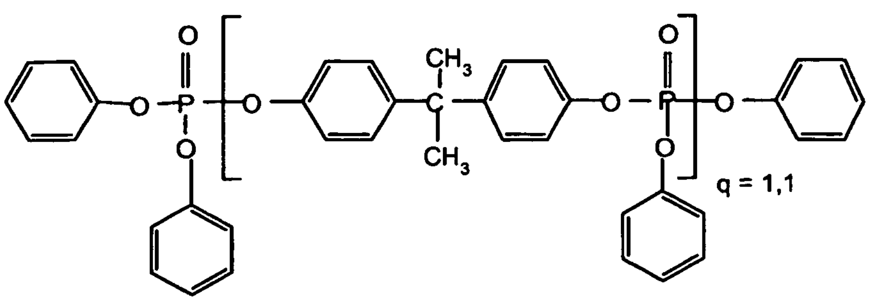

(IVa)

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben

sind, als Flammschutzmittel eingesetzt werden.

Die Flammschutzmittel können allein oder in beliebiger Mischung untereinander oder in Mischung mit anderen Flammschutzmitteln eingesetzt werden.

**Komponente E**

Geeignete phenolische Antioxidantien sind mindestens eine Verbindung ausgewählt aus der Gruppe bestehend aus sterisch gehinderte Phenole, Hydrochinone und Hydrochinonanaloge, substituierte Verbindungen sowie Antioxidantien auf Basis von Tocopherolen und deren Derivate.

Die sterisch gehinderten Phenole können einkemig oder mehrkernig sein. Die sterisch gehinderten Phenole können darüber hinaus substituiert und auch über Substituenten verbrückt sein. Hierzu zählen sowohl monomere wie auch oligomere Verbindungen, die aus mehreren phenolischen Grundkörpern aufgebaut sein können.

Vorzugsweise werden als phenolische Antioxidantien eine oder mehrere Verbindungen eingesetzt ausgewählt aus der Gruppe bestehend aus 2,6-Di-tert.-Butylphenol, 2,6-Di-tert.-Butylkresol (auch z.B. als BHT, Ionol 330 bekannt), Tetrakis-[methylen-(3,5-di-tert.-butyl-4-hydroxycinnamat)]methan (Irganox® 1010), 2,2'-Methylen-bis-(4-methyl-6-tert.-butylphenol) (Cyanox® 2246), Benzolpropansäure-3,5-bis(1,1-dimethylethyl)-4-hydroxy-, 1,1'-(thiodi-2,1-ethandiyl) ester (Irganox® 1035), 1,1,3-Tri(3-tert-butyl-4-hydroxy-6-methylphenyl)butan (Topanol® CA), Octadecyl-3-(3,5-di-tert-butyl-4-hydroxyphenyl)-propionat (Irganox® 1076), 4,4'-Butyliden-bis-(6-tert.-butyl-3-methylphenol) (Santowhite® powder), 1,3,5-Tris(2,6-dimethyl-4-tert-butyl-3-hydroxybenzyl)-isocyanurat (Cyanox® 1790), 1,3,5-Tris(3,5-di-tert-butyl-4-hydroxybenzyl)-s-triazin-2,4,6(1H,3H,5H)-trion (Goodrite® 3114), 1,3,5-Tris[2-[3-(3,5-di-tert-butyl-4-hydroxyphenyl)propionyloxy]ethyl]-s-triazin-2,4,6(1H,3H,5H)-trion (Goodrite® 3125), 1,3,5-Tris(3,5-di-tert-butyl-4-hydroxyphenylmethyl)-2,4,6-trimethylbenzol (Ethanox® 330, Irganox® 1330), 4,4'-Thiobis[2-tert-butyl-5-methylphenol] (Santonox® R), 2,2'-Methylenbis(6-cyclohexyl-4-methylphenol) (Vulkanox® ZKF).

In einer besonders bevorzugten Ausführungsform wird Octadecyl-3-(3,5-di-tert-butyl-4-hydroxyphenyl)propionat als Komponente E eingesetzt.

**Komponente F:**

Bei den erfindungsgemäß einsetzbaren neutralen phosphor- oder schwefelhaltigen Costabilisatoren handelt es sich um Verbindungen, die weder basische noch saure funktionelle Gruppen enthalten.

Vorzugsweise werden als neutrale phosphor- und schwefelhaltige Synergisten eine oder mehrere Verbindungen eingesetzt ausgewählt aus der Gruppe bestehend aus Tris-(nonylphenyl)phosphit (TNPP), Tris(2,4-tert-butylphenyl) phosphit (Irgafos® 168), Pentaerythritol-bis-(stearylphosphit) (Weston® 618), Pentaerythritol-bis-(2,6-Di-tert.-butylphenolphosphit) (Ultranox® 626), Tetrakis(2,4-di-tert-butylphenyl)[1,1'-biphenyl]-4,4'-diylbisphosphonite (Sandostab® P-EPQ, Irgafos P-EPQ), Dialkyl-thiodipropionate wie z.B. Dilaurylthiodipropionat (DLTDP), Distearylthiodipropionat (DSTDP).

In einer besonders bevorzugten Ausführungsform wird Irgafos® 168 als Komponente F eingesetzt.

**Nicht geeignet** sind Stabilisatoren (d.h. als Komponente E) und Synergisten (d.h. als Komponente F), die basische oder saure funktionelle Gruppen enthalten, z.B. Dialkyl-, Diarylphosphite (wie beispielsweise Diphenylphosphit gemäß Formel (V) oder 2,2'-Methylenbis(6-cyclohexyl-4-methylphenyl)phosphit gemäß Formel (VI)).

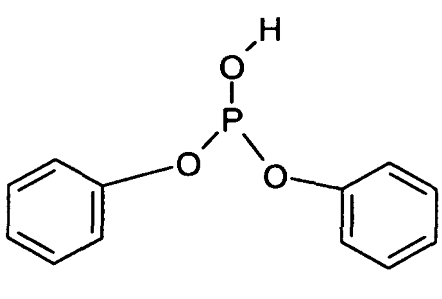

(V)

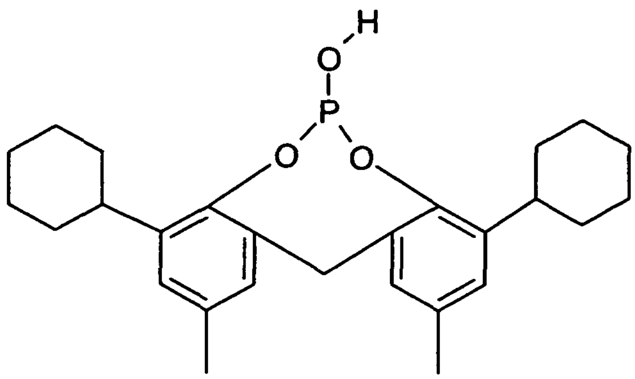

(VI)

## Komponente G

Die Zusammensetzung kann weitere handelsübliche Zusatzstoffe gemäß Komponente G wie Flammschutzsynergisten, von Komponente B verschiedene kautschukmodifizierte Pfropfpolymerisate, Antidrippingmittel (beispielsweise Verbindungen der Substanzklassen der fluorierten Polyolefine wie beispielsweise Polytetrafluorethylen, der Silikone sowie Aramidfasern), Gleit- und Entformungsmittel (beispielsweise Pentaerythrittetrastearat), Nukleiermittel, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasern, Glimmer, Kaolin, Talk, $CaCO_3$ und Glasschuppen) sowie Farbstoffe und Pigmente enthalten.

Die von Komponente B verschiedenen Pfropfpolymerisate werden durch radikalische Polymerisation, z.B. durch Emulsions-, Suspensions-, Lösungs- oder Massepolymerisation, hergestellt. Bevorzugt sind von Komponente B verschiedenen Pfropfpolymerisate, die durch Lösungs- oder Massepolymerisation hergestellt werden.

Fluorierte Polyolefine sind bekannt und beispielsweise in der EP-A 0 640 655 beschrieben. Sie werden zum Beispiel unter der Marke Teflon® 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate gemäß Komponente B oder mit einer Emulsion eines (Co)Polymerisats auf Vinylmonomer-Basis, insbesondere auf Styrol/Acrylnitril oder Methylmethacrylat Basis, eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat Komponente B oder einem Copolymerisat, vorzugsweise auf Vinylmonomer-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethacrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.%, vorzugsweise 7 bis 80 Gew.%.

Die fluorierten Polyolefine kommen vorzugsweise in Konzentrationen von 0 bis 2 Gew.-%, insbesondere von 0,1 bis 0,5 Gew.-%, bezogen auf die Summe der Gewichtsteile der Komponenten A+B+C, zum Einsatz, wobei sich diese Mengenangaben bei Einsatz eines Koagulats, Präcompounds oder Masterbatches auf das reine fluorierte Polyolefin beziehen.

## Herstellung der Formmassen und Formkörper

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Formmassen können zur Herstellung von Formteilen jeder Art verwendet werden.

Diese können durch Spritzguss, Extrusion und Blasformverfahren hergestellt werden. Eine weitere Form der Verarbeitung ist die Herstellung von Formteilen durch Tiefziehen aus zuvor hergestellten Platten oder Folien und das Verfahren der Folienhinterspritzung (IMD).

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; Automobilaußen- und -innenteilen; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise auch zur Herstellung von folgenden Formteilen verwendet werden:

Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

Gegenstand der Erfindung sind daher auch ein Verfahren zu Herstellung der Zusammensetzungen sowie deren Verwendung zur Herstellung von Formteilen und die Formteile selbst.

## Beispiele

### Komponente A

Lineares Polycarbonat auf Basis Bisphenol-A mit einem gewichtsgemittelten Molekulargewicht $\overline{M}_w$ von 27500 g/mol (bestimmt durch GPC in $CH_2Cl_2$ bei 25°C ).

### Komponente B

Alle Gewichtsteilangaben in den nachstehenden Beispielen zu Pfropfpolymerisaten sind so normiert, dass bei jedem nachfolgend angegebenen Pfropfpolymerisat die Summe aus den Gewichtsteilen (Gew.-Tle.) der Pfropfgrundlage (Polybutadien) und den Gew.-Tle. der Pfropfmonomere (Styrol und Acrylnitril) 100 Gew.-Tle. ergibt. Die Mengen an Wasser, Emulgatoren, Initiatoren und anderen Hilfsmitteln beziehen sich auf diese Summe der Gew.-Tle. der Pfropfgrundlage und der Pfropfmonomeren (= 100 Gew.-Tle.).

### Herstellung der Kautschukgrundlage B2.3:

In einem ersten Schritt werden die Polybutadienlatices B2.1 bzw. B2.2 jeweils separat durch radikalische Emulsionspolymerisation von Butadien in Gegenwart des Natrium-Salzes eines TCD-Emulgators, wie er in EP-A 394 779 (Beispiel 1) beschrieben wird (siehe hierzu vereinfachte Formel (VII)), hergestellt.

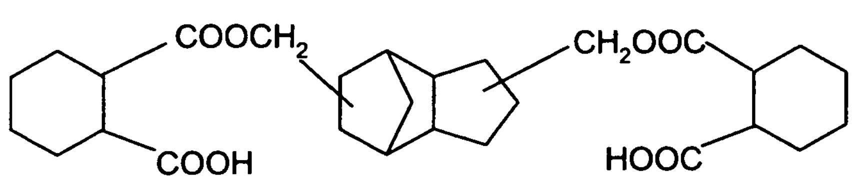

(VII)

Die Herstellung der Polybutadienlatices B2.1 und B2.2 wird dabei nach dem Fachmann bekannten Methoden so geführt, dass diese jeweils eine bestimmte mittlere gewichtsgemittelte Teichengröße $d_{50}$ aufweisen:

B2.1: $d_{50}$ = 290 nm
B2.2: $d_{50}$ = 400 nm

Der Feststoffgehalt der Latices B2.1 und B2.2 beträgt jeweils 45 Gew.%.

In einem zweiten Schritt werden diese Polybutadienlatices B2.1 bzw. B2.2 in einem Gewichtsverhältnis von 1:

1 (bezogen auf festes Polymer) miteinander vermischt. Die resultierende Polybutadienkautschukgrundlage B2.3 weist eine bimodale Teilchengrößeverteilung auf mit einer mittleren gewichtsgemittelten Teilchengröße $d_{50}$ = 345 nm. Der Feststoffgehalt der Polybutadienkautschukgrundlage B2.3 beträgt 45 Gew.%.

**Allgemeine Vorschrift (I) (Redox-Initierung):**

**Herstellung von Pfropfpolymerisaten vom Typ B-I**

60 Gew.-Tle. B2.3 (gerechnet als Feststoff) werden mit Wasser auf einen Feststoffgehalt von 20 Gew.% verdünnt. Danach wird das Gemisch auf 60˚C erwärmt, wonach innerhalb von 8h 0,3 Gew.-Tle. tert-Butylhydroperoxid (gelöst in 20 Gew.-Tle. Wasser) sowie 0,4 Gew.-Tle. Natriumascorbat (gelöst in 20 Gew.-Tle. Wasser) gleichzeitig zudosiert werden. Dann werden innerhalb von 4h die folgenden Komponenten simultan zudosiert, wobei gleichzeitig auch die Reaktionstemperatur innerhalb dieser 4h auf 80˚C schrittweise angehoben wird:

a) 40 Gew.-Tle. eines Monomergemisches (Gew.-Verhältnis Styrol:Acrylnitril = 73:27)) und
b) 1,5 bzw. 2,2 Gew.-Tle. (gerechnet als Festsubstanz, die jeweils eingesetzte Menge ist den nachfolgenden Komponenten und Tabellen zu entnehmen) des Natriumsalzes einer disproportionierten Harzsäure (Dresinate® 731, Abieta Chemie GmbH, Gersthofen), gelöst in mit NaOH alkalisch (pH = 10-12) eingestellten Wasser.

Es wird für 2 h das Reaktionsgemisch bei 80˚C belassen (Nachreaktionszeit). Anschließend wird 1 Gew.-Teil eines phenolischen Antioxidanz zugegeben und vermischt.
Die resultierende Pfropfpolymerisat-Dispersion mit einem Feststoffgehalt von 32 Gew.% wird anschließend aufgearbeitet (siehe unten die entsprechende allgemeine Vorschrift).

**Allgemeine Vorschrift (II) (Persulfat-Initierung):**

**Herstellung_ von Pfropfpolymerisaten vom Typ B-II**

60 Gew.-Tle. B2.3 (gerechnet als Feststoff) werden mit Wasser auf einen Feststoffgehalt von 20 Gew.-% verdünnt. Danach wird das Gemisch auf 60˚C erwärmt und mit 0,5 Gew.-Tle. Kaliumperoxodisulfat (gelöst in 25 Gew.-Tle. Wasser) versetzt.
Dann werden innerhalb von 6h die folgenden Komponenten simultan zudosiert, wobei gleichzeitig auch die Reaktionstemperatur innerhalb dieser 6h auf 80˚C schrittweise angehoben wird:

a) 40 Gew.-Tle. eines Monomergemisches (Gew.-Verhältnis Styrol:Acrylnitril = 73:27)),
b) 0,1 Gew.-Tle. *tert*-Dodecylmercaptan und
c) 1,0 bzw. 1,4 Gew.-Tle. (gerechnet als Festsubstanz, die jeweils eingesetzte Menge ist den nachfolgenden Komponenten und Tabellen zu entnehmen) des Natriumsalzes einer disproportionierten Harzsäure (Dresinate® 731, Abieta Chemie GmbH, Gersthofen), gelöst in mit NaOH alkalisch (pH =10-12) eingestellten Wasser.

Es wird für 2 h das Reaktionsgemisch bei 80˚C belassen (Nachreaktionszeit). Anschließend wird 1 Gew.-Teil eines phenolischen Antioxidanz zugegeben und vermischt.
Die resultierende Pfropfpolymerisat-Dispersion von 32 Gew.% wird anschließend aufgearbeitet (siehe unten die entsprechende allgemeine Vorschrift).

**Allgemeine Vorschrift zur Aufarbeitung einer Pfropfpolymerisat-Dispersion hergestellt nach der allgemeinen Vorschrift (I) oder (II):**

In den darauf folgenden Beispielen wird angegeben, ob die Pfropfpolymerisat-Dispersion hergestellt nach der allgemeinen Vorschrift (I) oder (II) separat oder als Cofällung aufgearbeitet werden.

a) separate Fällung:

Die jeweilige Pfropfpolymerisat-Dispersion wird zu einer Fälllösung (bestehend aus 2 Gew.-Tle. Magnesiumsulfat, 1 Gew.-Teil Essigsäure und 100 Gew.-Tle. Wasser) bei 95˚C zugegeben, abfiltriert, und das resultierende Pulver bei 70 ˚C im Vakuum bis zu einem Restfeuchtegehalt von < 0.5 Gew.-% getrocknet. Der pH-Wert des in frisch destilliertem Wasser zu einer 10%-igen (Gew.-%) Suspension aufgeschlämmten Pulvers hat einen Wert zwischen 6 und 7.

b) Cofällung:

75 Gew.-Tle. (bezogen auf Feststoff) der Pfropfpolymerisat-Dispersion B-I und 25 Gew.-Tle. (bezogen auf Feststoff) der Pfropfpolymerisat-Dispersion B-II werden miteinander vermischt und anschließend zu einer Fälllösung (bestehend aus 2 Gew.-Tle. Magnesiumsulfat, 1 Gew.-Teil Essigsäure und 100 Gew.-Tle. Wasser) bei 95°C zugegeben, abfiltriert, und das resultierende Pulver bei 70 °C im Vakuum bis zu einem Restfeuchtegehalt von < 0.5 Gew.-% getrocknet. Der pH-Wert des in frisch destilliertem Wasser zu einer 10-%-igen (Gew.-%) Suspension aufgeschlämmten Pulvers hat einen Wert zwischen 6 und 7.

**Komponente B1(1)**

ABS- Emulsions-Pfropfpolymerisat, hergestellt nach der allgemeinen Vorschrift (I) unter Verwendung von 1.5 Tle. Dresinate® 731 und Aufarbeitung mittels separater Fällung.

**Komponente B1(2)**

ABS- Emulsions-Pfropfpolymerisat, hergestellt nach der allgemeinen Vorschrift (I) unter Verwendung von 2.2 Tle. Dresinate® 731 und Aufarbeitung mittels separater Fällung.

**Komponente B2(1)**

ABS- Emulsions-Pfropfpolymerisat, hergestellt nach der allgemeinen Vorschrift (II) unter Verwendung von 1.0 Tle. Dresinate® 731 und Aufarbeitung mittels separater Fällung.

**Komponente B2(2)**

ABS- Emulsions-Pfropfpolymerisat, hergestellt nach der allgemeinen Vorschrift (II) unter Verwendung von 1.4 Tle. Dresinate® 731 und Aufarbeitung mittels separater Fällung.

**Komponente B(1)**

ABS- Emulsions-Pfropfpolymerisat, hergestellt durch Aufarbeitung mittels Cofällung von

75 Gew.-Tle. (bezogen auf Feststoff) der Pfropfpolymerisat-Dispersion B-I hergestellt nach allgemeiner Vorschrift (I) mit 1,5 Tle. Dresinate® 731 und
25 Gew.-Tle. (bezogen auf Feststoff) der Pfropfpolymerisat-Dispersion B-II hergestellt nach allgemeiner Vorschrift (II) mit 1,0 Tle. Dresinate® 731.

**Komponente B(2)**

ABS- Emulsions-Pfropfpolymerisat, hergestellt durch Aufarbeitung mittels Cofällung von

75 Gew.-Tle. (bezogen auf Feststoff) der Pfropfpolymerisat-Dispersionen B-I hergestellt nach allgemeiner Vorschrift (I) mit 2,2 Tle. Dresinate® 731 und
25 Gew.-Tle. (bezogen auf Feststoff) der Pfropfpolymerisat-Dispersion B-II hergestellt nach allgemeiner Vorschrift (II) mit 1,4 Tle. Dresinate® 731.

**Komponente C**

**C-1**: Copolymerisat aus 75 Gew.-% Styrol und 25 Gew.-% Acrylnitril mit einem gewichtsgemittelten Molekulargewicht $M_w$ von 130 kg/mol (bestimmt durch GPC), hergestellt nach dem Massepolymerisationsverfahren.

**C-2**: Copolymerisat aus 72 Gew.-% Styrol und 28 Gew.-% Acrylnitril mit einem gewichtsgemittelten Molekulargewicht $M_w$ von 100 kg/mol (bestimmt durch GPC), hergestellt nach dem Massepolymerisationsverfahren.

**Komponente D**

D-**1**: Bisphenol-A-diphenyldiphosphat, Reofos BAPP, Fa. Great Lakes
D-**2**: Triphenylphosphat, Disflamoll TP, Fa. Lanxess

**Komponente E**

E-**1**: Octadecyl-3-(3,5-di-tert-butyl-4-hydroxyphenyl)propionat (ein sterisch-gehindertes Phenol, Irganox® 1076, Fa. Ciba Spezialitätenchemie)

E-**2**: 2,2'-Methylenbis(6-cyclohexyl-4-methylphenyl)phosphit (als saurer PhosphitStabilisator) (Vergleich)

**Komponente F**

F-**1**: Tris-(2,4-ditertbutylphenyl)phosphit (Irgafos® 168, Fa. Ciba Spezialitätenchemie)
F-**2**: DLTDP (Dilaurylthiodipropionat) (Fa. ABCR)

**Komponente G**

G-**1**: Pentaerythrittetrastearat
G-**2**: Poly(tetrafluorethylen) (PTFE, CFP 6000N, Fa. DuPont)

**Herstellung und Ausprüfung der Formmassen**

Das Vermischen der eingesetzten Komponenten mit den üblichen Verarbeitungshilfsmitteln erfolgte entweder auf einem Doppelwellenextruder ZSK 25 oder in einem 1.3-Liter Innenkneter. Die Formkörper werden auf einer Spritzgießmaschine Typ Arburg 270E bei 240°C, 260°C oder bei 300°C hergestellt.
Die Zusammensetzungen der hergestellten Formmassen sind den nachfolgenden Tabellen 1 bis 4 zu entnehmen.
Die Beurteilung der **Eigenfarbe / des Rohtons** erfolgte durch die Bestimmung des *Yellowness Index* (YI) an Farbmusterplatten mit den Abmessungen 60 x 40 x 2 mm gemäß der ASTM-Norm E-313-96 (Lichtart: C, Beobachter: 2°, Messöffnung: Large Area Value) nach der Gleichung YI = (128X - 106Z)/Y, mit X,Y,Z = Farbkoordinaten gemäß DIN 5033. Je nachdem, bei welcher Temperatur die Formkörper auf der Spritzgießmaschine hergestellt wurden, wird dies in der Tabelle als YI / 260°C oder YI / 300°C bezeichnet.
Als Maß für die **Hydrolysebeständigkeit** der so hergestellten Zusammensetzungen dient die Änderung des MVR gemessen nach ISO 1133 bei 260°C (im Falle von Flammschutzmittelfreien Zusammensetzungen) bzw. bei 240°C (im Falle von Zusammensetzungen enthaltend Flammschutzmittel) mit einer Stempellast von 5 kg bei einer 7-tägigen Lagerung des Granulats bei 95°C und 100% relativer Luftfeuchte ("FWL-Lagerung") für nicht flammgeschützte Polycarbonatzusammensetzungen und bei einer 2-tägigen Lagerung des Granulats bei 95°C und 100% relativer Luftfeuchte ("FWL-Lagerung") für Polycarbonat-Zusammensetzungen, die Flammschutzmittel enthalten . Dabei wird der Anstieg des MVR-Wertes gegenüber dem MVR-Wert vor der entsprechenden Lagerung als ΔMVR(hydr.), welcher sich durch nachstehende Formel definiert, berechnet.

$$\Delta MVR(hyrdr) = \frac{MVR(nach\,FWL - Lagerung) - MVR(vor\,Lagerung)}{MVR(vor\,Lagerung)} \bullet 100\%$$

Die Charakterisierung der Flammschutzeigenschaften erfolgt gemäß UL 94 V (an Stäben der Abmessung 127 x 12,7 x 1,5 mm gemessen).

Tabelle 1: Eigenschaften der Zusammensetzungen ohne Flammschutzmittel 1. Serie. Herstellung der Formmassen auf einem Doppelwellenextruder ZSK25

| Zusammen-Setzung | | 1 | 2 | 3 (Vgl.) | 4 (Vgl.) | 5 (Vgl.) | 6 (Vgl.) | 7 (Vgl.) | 8 (Vgl.) | 9 (Vgl.) | 10 (Vgl.) | 11 (Vgl.) | 12 (Vgl.) |
|---|---|---|---|---|---|---|---|---|---|---|---|---|---|
| A | Gew.-Tle. | 58 | 58 | 58 | 58 | 58 | 58 | 58 | 58 | 58 | 58 | 58 | 58 |
| B(1) | Gew.-Tle. | 18 | | | | | | | | | 18 | | |
| B(2) | Gew.-Tle. | | 18 | | | | | | | | | 18 | |
| B1(1) | Gew.-Tle. | | | 18 | | 13,5 | | | 18 | | | | 13,5 |
| B1(2) | Gew.-Tle. | | | | | | 18 | | | | | | |
| B2(1) | Gew.-Tle. | | | | 18 | 4,5 | | | | 18 | | | |
| B2(2) | Gew.-Tle. | | | | | | | 18 | | | | | 4,5 |
| C-1 | Gew.-Tle. | 24 | 24 | 24 | 24 | 24 | 24 | 24 | 24 | 24 | 24 | 24 | 24 |
| E-1 | Gew.-Tle. | 0,13 | 0,13 | 0,13 | 0,13 | 0,13 | 0,13 | 0,13 | | | | | |
| E-2 | Gew.-Tle. | | | | | | | | 0,12 | 0,12 | 0,12 | 0,12 | 0,12 |
| F-1 | Gew.-Tle. | 0,09 | 0,09 | 0,09 | 0,09 | 0,09 | 0,09 | 0,09 | | | | | |
| G-1 | Gew.-Tle. | 0,75 | 0,75 | 0,75 | 0,75 | 0,75 | 0,75 | 0,75 | 0,75 | 0,75 | 0,75 | 0,75 | 0,75 |
| Eigenschaften | | | | | | | | | | | | | |
| ΔMVR(hydr.) | [%] | 105 | 112 | 100 | 95 | 92 | 140 | 82 | 282 | 167 | 191 | 228 | 274 |
| YI/260˚C | | 19 | 19 | 28 | 37 | 29 | 32 | 30 | 42 | 40 | 33 | 29 | 38 |
| YI/300˚C | | 25 | 25 | 30 | 37 | 29 | 36 | 34 | 45 | 43 | 38 | 32 | 41 |

Tabelle 2: Eigenschaften der Zusammensetzungen ohne Flammschutzmittel 2. Serie - Herstellung der Formmassen in einem 1,3-Liter Innenkneter

| Zusammensetzung | | **13 (Vgl.)** | **14** | **15** | **16** | **17 (Vgl.)** |
|---|---|---|---|---|---|---|
| A | Gew.-Tle. | 58 | 58 | 58 | 58 | 58 |
| B(2) | Gew.-Tle. | 18 | 18 | 18 | 18 | 18 |
| C-1 | Gew.-Tle. | 24 | 24 | 24 | 24 | 24 |
| E-1 | Gew.-Tle. | 0,13 | 0,13 | 0,13 | 0,13 | 0,13 |
| E-2 | Gew.-Tle. | | | | | 0,12 |
| F-1 | Gew.-Tle. | | 0,09 | | 0,09 | |
| F-2 | Gew.-Tle. | | | 0,09 | 0,09 | |
| G-1 | Gew.-Tle. | 0,75 | 0,75 | 0,75 | 0,75 | 0,75 |
| Eigenschaften | | | | | | |
| ΔMVR(hydr.) | [%] | 109 | 121 | 126 | 128 | 212 |
| YI/260°C | | 29 | 28 | 31 | 31 | 36 |
| YI/300°C | | 34 | 32 | 32 | 33 | 42 |

Tabelle 3: Eigenschaften der Zusammensetzungen mit Flammschutzmittel Herstellung der Formmassen auf einem Doppelwellenextruder ZSK25

| Zusammensetzung | | **18** | **19 (Vgl.)** |
|---|---|---|---|
| A | Gew.-Tle. | 80,3 | 80,3 |
| B(2) | Gew.-Tle. | 12,5 | 12,5 |
| C-1 | Gew.-Tle. | 7,2 | 7,2 |
| D-1 | Gew.-Tle. | 12,8 | 12,8 |
| D-2 | Gew.-Tle. | 4,2 | 4,2 |
| E-1 | Gew.-Tle. | 0,02 | |
| E-2 | Gew.-Tle. | | 0,12 |
| F-1 | Gew.-Tle. | 0,09 | |
| G-1 | Gew.-Tle. | 0,5 | 0,5 |
| G-2 | Gew.-Tle. | 0,5 | 0,5 |
| Eigenschaften | | | |
| ΔMVR(hydr.) | [%] | 150 | 350 |
| YI/260°C | | 14 | 22 |
| YI/300°C | | 26 | 29 |

Tabelle 4: Eigenschaften der Zusammensetzungen mit Flammschutzmittel Herstellung der Formmassen auf einem Doppelwellenextruder ZSK25

| Zusammensetzung | | **20 (Vgl.)** | **21** | **22** | **23 (Vgl.)** |
|---|---|---|---|---|---|
| A | Gew.-Tle. | 79,0 | 79,0 | 79,0 | 79,0 |
| B(2) | Gew.-Tle. | 13,4 | 13,4 | 13,4 | 13,4 |

(fortgesetzt)

| Zusammensetzung | | 20 (Vgl.) | 21 | 22 | 23 (Vgl.) |
|---|---|---|---|---|---|
| C-1 | Gew.-Tle. | 7,6 | 7,6 | 7,6 | 7,6 |
| D-1 | Gew.-Tle. | 17,1 | 17,1 | 17,1 | 17,1 |
| E-1 | Gew.-Tle. | 0,02 | 0,02 | 0,02 | |
| E-2 | Gew.-Tle. | | | | 0,12 |
| F-1 | Gew.-Tle. | | 0,09 | | |
| F-2 | Gew.-Tle. | | | 0,12 | |
| G-1 | Gew.-Tle. | 0,5 | | | 0,5 |
| G-2 | Gew.-Tle. | 0,5 | | | 0,5 |
| Eigenschaften | | | | | |
| ΔMVR(hydr.) | [%] | 167 | 155 | 153 | 462 |
| YI/260˚C | | 45 | 39 | 41 | 49 |
| YI/300˚C | | 44 | 42 | 43 | 49 |
| UL94V /1,5mm | Bewertung | V-0 | V-0 | V-0 | V-0 |
| Nachbrennzeit | [sec] | 10 | 11 | 11 | 13 |

Aus den oben aufgeführten Beispielen wird ersichtlich, dass die schlagzähmodifizierten Polycarbonat-Formassen, die ein erfindungsgemäßes Emulsionspfropfpolymerisat (ABS) als Schlagzähmodifikator enthalten, einen guten Rohton und eine gute Hydrolysebeständigkeit aufweisen, wenn sie mit einem phenolischen Antioxidanz (E-1) mit ggf. zugesetzten Synergisten wie neutrale organische Phosphite (F-1) oder Thioverbindungen (F-2) stabilisiert sind. Das erfindungsgemäße Emulsionspfropfpolymerisat (ABS) besteht aus zwei Komponenten, wobei die eine mittels Redox-Initiierung und die andere mittels anorganischer Persulfat-Initiierung polymerisiert ist und wobei die beiden Komponenten auf der Stufe der Pfropfpolymerisat-Dispersion als Latices miteinander vermischt und als Latex-Mischung cogefällt wurden.

Im einzelnen zeigen die erfindungsgemäßen Zusammensetzungen 1 und 2 sowohl eine gute Hydrolysebeständigkeit (ΔMVR(hydr.) = 105% bzw. 112%) als auch einen sehr hellen Rohton (YI von 19 nach Spritzguss bei 260˚C Schmelzetemperatur und 80˚C Werkzeugtemperatur bzw. YI von 25 nach Spritzguss bei 300˚C Schmelzetemperatur und 80˚C Werkzeugtemperatur). Dagegen zeigen die Zusammensetzungen der Vergleichsbeispiele 3, 4, 6 und 7, die als Emulsions-ABS eine der Einzelkomponenten (d.h. B1(1), B1(2), oder B2(2)) enthalten, sowie die Zusammensetzung des Vergleichsbeispiels 5 (enthält ein Gemisch aus B1(1) + B2(1), wobei diese Komponenten im Unterschied zur vorliegenden Erfindung als Pulver und nicht auf der Stufe der Pfropfpolymerisat-Dispersionen miteinander vermischt wurden), zwar eine gute Hydrolysebeständigkeit, jedoch zeigen diese einen deutlich schlechteren Rohton (jeweils YI > 28; selbst nach dem Spritzguss bei 260˚C Schmelzetemperatur und 80˚C Werkzeugtemperatur).

Diese oben diskutierten Ergebnisse spiegeln sich auch in der zweiten Versuchsserie (Tabelle 2) wider, wobei allerdings aufgrund der schärferen Verarbeitungsbedingungen ein insgesamt schlechteres Rohtonniveau resultiert, was mit der längeren Verweilzeit der Zusammensetzung in einem Innenkneter als in einem Extruder erklärt werden kann. Somit belegen auch die in Tabelle 2 gezeigten Ergebnisse, dass die erfindungsgemäßen Zusammensetzungen sich durch einen guten Rohton und gleichzeitig eine hohe Hydrolysestabilität auszeichnen.

Alle Zusammensetzungen (Vergleichsbeispiele), die einen sauren Phosphitstabilisator E-2 enthalten, zeigen sowohl eine schlechtere Hydrolysebeständigkeit als auch einen deutlich schlechteren Rohton als die erfindungsgemäßen Zusammensetzungen, welche im Unterschied hierzu ein neutrales phenolisches Antioxidanz E-1 und ggf. als Synergist ein neutrales organisches Phosphit F-1 oder eine Thioverbindung F-2 enthalten (siehe Tabellen 3 und 4).

**Patentansprüche**

1. Zusammensetzungen enthaltend

A) ein aromatisches Polycarbonat und/oder aromatisches Polyestercarbonat,

B) ein Pfropfpolymerisat erhältlich durch Cofällung einer Mischung aus mindestens zwei Pfropfpolymerisat-Dispersionen B.1 und B.2, **dadurch gekennzeichnet, dass** die Herstellung der Pfropfpolymerisat-Komponente B.1 unter Verwendung von mindestens einem Redox-System als Initiator und dass die Herstellung der Pfropfpolymerisat-Komponente B.2 unter Verwendung von mindestens einer Persulfatverbindung als Initiator erfolgt, und
C) 0 bis 40 Gew.-Tle. Vinyl(Co)Polymerisat und/oder Polyalkylenterephthalat
E) phenolisches Antioxidant,
wobei die Zusammensetzungen frei sind von Stabilisatoren (Komponente E) und Synergisten (Komponente F), die basische oder saure funktionelle Gruppen enthalten, und
wobei die Zusammensetzung 0,01 bis 2 Gew.-Tle., jeweils bezogen auf die Summe der Gew.-Tle. der Komponenten A+B+-C-neutrale phosphor- oder schwefelhaltige Costabilisatoren enthält, die weder basische noch saure funktionelle Gruppen enthalten, als Komponente F.

**2.** Zusammensetzungen gemäß Anspruch 1 enthaltend

A) 10 bis 99 Gew.-Tle. aromatisches Polycarbonat und/oder aromatisches Polyestercarbonat,
B) 1 bis 50 Gew.-Tle. eines Pfropfpolymerisats erhältlich durch Cofällung einer Mischung aus mindestens zwei Phopbolymerisat-Dispersionen B.1 und B.2, **dadurch gekennzeichnet, dass** die Herstellung der Pfropfpolymerisat-Komponente B.1 unter Verwendung von. mindestens einem Redox-System als Initiator und dass die Herstellung der Pfropfpolymerisat-Komponente B.2 unter Verwendung von mindestens einer Persulfatverbindung als Initiator erfolgt,
C) 0 bis 40 Gew.-Tle. Vinyl(Co)Polymerisat und/oder Polyalkylenterephthalat,
D) 0 bis 50 Gew.-Tle. bezogen auf die Summe der Komponenten A+B+C, phosphorhaltiges Flammschutzmittel,
E) 0,005 bis 1 Gew.-Tle., bezogen auf die Summe der Komponenten A+B +C, mindestens eines phenolischen Antioxidanz,
F) 0,01 bis 2, Gew.-Tle.bezogen auf die Summe der Komponenten A+B+C, neutrale pbosphor- oder schwefelhaltige Costabilisatoren (im Folgenden auch als Synergisten bezeichnet), und
G) 0 bis 50 Gew.-Tle., bezogen auf die Summe der Komponenten A+B+C, Zusatzstoffe.

**3.** Zusammensetzungen gemäß Anspruch 1 oder 2 enthaltend 0,02 bis 0,3 Gew.-Tle Komponente E und 0,05 bis 0,5 Gcw.-Tle Komponente F (jeweils bezogen auf die Summe der Gew.-Tle. der Komponenten A+B+C).

**4.** Zusammensetzung gemäß einem der Ansprüche 1 bis 3, wobei die Komponente B ein Pfropfpolymerisat hergestellt durch Cofällung einer Mischung aus zwei Pfropfpolymerisat-Dispersionar B.1 und B.2 ist, wobei B.1 und B.2 jeweils eine Polymerdispersion in Wasser von

i) 15 bis 60 Gew.-%, wenigstens eines Vinylmonomeren auf
ii) 85 bis 40 Cew.-% einer oder mehrerer Pfropfgrundlagar mit Glasübergangstemperaturen < 10°C

ist.

**5.** Zusammensetzung gemäß einem der Ansprüche 1 bis 4, wobei der pH-Wert der Komponente B einen Wert von 3 bis 9 aufweist.

**6.** Zusammensetzung gemäß einem der Ansprüche 1 bis 5, wobei die Pfropfgrundlage der Komponente B eine mittlere Teilchengröße ($d_{50}$-Wert) von 0,2 bis 0,4 $\mu$m aufweist.

**7.** Zusammensetzung gemaß einem der Ansprüche 1 bis 6, enthaltend 2 bis 30 Gew.-Tle. (bezogen auf die Summe der Gew.-Tle. der Komponenten A+B+C) phosphorhaltiges Flammschutzmittel gemäß Komponente D.

**8.** Zusammensetzung gemäß Anspruch 7, enthaltend als Komponente D mono- und oligomere Phosphorverbindungen der allgemeinen Formel (IV)

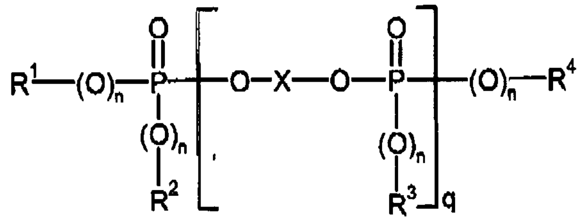

(IV)

worin
$R^1$, $R^2$, $R^3$ und $R^4$, unabhängig voreinander jeweils gegebenenfalls halogeniertes $C_1$ bis $C_8$-Alkyl, jeweils gegebenenfalls durch Alkyl und/oder Halogensubstituiertes $C_5$ bis $C_6$-Cycloalkyl, $C_6$ bis $C_{20}$-Aryl oder $C_7$ bis $C_{12}$-Aralkyl,
n unabhängig voneinander, 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

**9.** Zusammensetzung gemäß einem der Ansprüche 1 bis 8 wobei Komponente E eine oder mehrere Verbindungen ausgewählt aus der Gruppe bestehend aus
2,6-Di-tert.-Butylphenol, 2,6-Di-tert.-Butylkresol,
Tetrakis-[methylen-(3,3-di-tert.-butyl-4-hydroxycinnamate)]methan,
2,2'-Methylen-bis-(4-methyl-6-tert.-butylphenol),
Benzolpxopansäure-3,5-bis(1,1-dimethylethyl)-4-hydroxy-, 1,1'-(thiodi-2,1-ethandiyl)ester,
1,1,3-Tri(3-tert-butyl-4-hydroxy-6-methylphenyl)butan,
Octadecyl-3-(3,5-di-tert-butyl-4-hydroxyphenyl)propionat,
4,4'-Butylidenebis-(6-tert.-butyl-3-methylphenol),
1,3,5-Tris(2,6-dimethyl-4-tert-butyl-3-hydroxyybenzyl)-isocyanurat, 1,3,5-Tris(3,5-di-tert-butyl-4-hydroxybenzyl)-s-triazin-2,4,6(1H,3H,5H)-trion,
1,3,5-Tris[2-[3-(3,5-di-tert-butyl-4-hydroxyphenyl)propionyloxy ]ethyl]-s-triazin-2.4.6(1H,3H,5H)-trion,
1,3,5-Tris(3,5-di-tert-butyl-4-hydroxyphenylmethyl)-2,4,6-trimethylbenzol,
4,4'-Thiobis[2-tert-butyl-5-methylphenol], und
2,2'-Methylenbis(6-cyclohexyl-4-methylphenol)
ist.

**10.** Zusammensetzung gemäß einem der Ansprüche 1 bis 9, wobei. Komponente F eine oder mehrere Verbindungen ausgewählt aus der Gruppe bestchend aus
Tris-(nonylphenyl)phosphit
Tris(2,4-tert-butylphenyl)phosphit,
Pentaerythritol-bis-(stearylphosphit),
Pentaerythritol-bis-(2,6-Di-tert.-butylphenolphosphit).
Tetrakis(2,4-di-tert-butylphenyl)[1,1'-biphenyl]-4,4'-diylbisphosphonite,
Dilaurylthiodipropionat, und
Distearylthiodipropionat
ist.

**11.** Verwendung der Zusammensetzungen gemäß Anspruch 1 bis 10 zur Herstellung von Formkörpern.

**12.** Formkörper, enthaltend eine Zusammensetzung nach einem der Ansprüche 1 bis 10.

**13.** Formkörper nach Anspruch 12 **dadurch gekennzeichnet, dass** der Formkörper ein Teil eines Kraftfahrzeugs, Schienenfahrzeugs, Luftfahrzeugs oder Wassetfahrzeugs oder eine Folie, ein Profil oder Gehäuseteile jeder Art ist.

## Claims

**1.** Compositions comprising

A) an aromatic polycarbonate and/or aromatic polyester carbonate,
B) a graft polymer obtainable by coprecipitating a mixture of at least two graft polymer dispersions B.1 and B.2, **characterized in that** the preparation of the graft polymer component B.1 takes place using at least one redox system as initiator and **in that** the preparation of the graft polymer component B.2 takes place using at least one persulphate compound as initiator, and
C) 0 to 40 parts by weight of vinyl (co)polymer and/or polyalkylene terephthalate,
E) phenolic antioxidant,
where the compositions are free from stabilizers (component E) and synergists (component F) which contain basic or acidic functional groups, and
where the composition contains 0.01 to 2 parts by weight, based in each case on the sum of the parts by weight of components A + B + C, of neutral phosphorus- or sulphur-containing costabilizers which contain neither basic nor acidic functional groups, as component F.

**2.** Compositions according to Claim 1, comprising

A) 10 to 99 parts by weight of aromatic polycarbonate and/or aromatic polyester carbonate,
B) 1 to 50 parts by weight of a graft polymer obtainable by coprecipitating a mixture of at least two graft polymer dispersions B.1 and B.2, **characterized in that** the preparation of the graft polymer component B.1 takes place using at least one redox system as initiator and **in that** the preparation of the graft polymer component B.2 takes place using at least one persulphate compound as initiator,
C) 0 to 40 parts by weight of vinyl (co)polymer and/or polyalkylene terephthalate,
D) 0 to 50 parts by weight, based on the sum of components A + B + C, of phosphorus-containing flame retardant,
E) 0.005 to 1 part by weight, based on the sum of components A + B + C, of at least one phenolic antioxidant,
F) 0.01 to 2 parts by weight, based on the sum of components A + B + C, of neutral phosphorus- or sulphur-containing costabilizers (also referred to below as synergists), and
G) 0 to 50 parts by weight, based on the sum of components A + B + C, of additives.

**3.** Compositions according to Claim 1 or 2, containing 0.02 to 0.3 parts by weight of component E and 0.05 to 0.5 parts by weight of component F (based in each case on the sum of the parts by weight of components A + B + C).

**4.** Composition according to any of Claims 1 to 3, where component B is a graft polymer prepared by coprecipitating a mixture of two graft polymer dispersion B.1 and B.2, where B.1 and B.2 are each a polymer dispersion in water of

i) 15% to 60% by weight of at least one vinyl monomer
ii) 85% to 40% by weight of one or more graft bases having glass transition temperatures < 10˚C.

**5.** Composition according to any of Claims 1 to 4, wherein the pH of component B has a value of 3 to 9.

**6.** Composition according to any of Claims 1 to 5, where the graft base of component B has an average particle size ($d_{50}$)of 0.2 to 0.4 μm.

**7.** Composition according to any of Claims 1 to 6, containing 2 to 30 parts by weight (based on the sum of the parts by weight of components A + B + C) of phosphorus-containing flame retardant as component D.

**8.** Composition according to Claim 7, comprising as component D monomeric and oligomeric phosphorus compounds of the general formula (IV)

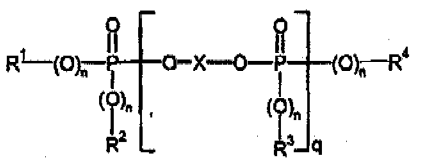

(IV)

in which

$R^1$, $R^2$, $R^3$ and $R^4$ independently of one another are each optionally halogenated $C_1$ to $C_8$ alkyl, in each case optionally alkyl- and/or halogen-substituted $C_5$ to $C_6$ cycloalkyl, $C_6$ to $C_{20}$ aryl or $C_7$ to $C_{12}$ aralkyl,

n independently at each occurrence is 0 or 1,
q is 0 to 30, and
X is a monocyclic or polycyclic aromatic radical having 6 to 30 C atoms, or a linear or branched aliphatic radical having 2 to 30 C atoms, which may be OH-substituted and may contain up to 8 ether bonds.

**9.** Composition according to any of Claims 1 to 8, where component E is one or more compounds selected from the group consisting of
2,6-di-tert-butylphenol,
2,6-di-tert-butylcresol,
tetrakis[methylene(3,5-di-tert-butyl-4-hydroxy-cirinamate)]methane,
2,2'-methylenebis(4-methyl-6-tert-butylphenol), 3,5-bis(1,1-dimethylethyl)-4-hydroxy-1,1'-(thio-di-2,1-ethanediyl) benzenepropanoate,
1,1,3-tri(3-tert-butyl-4-hydroxy-6-methylphenyl)butane,
octadecyl 3-(3,5-di-tert-butyl-4-hydroxyphenyl)propionate,
4,4'-butylidenebis(6-tert-butyl-3-methylphenol),
1,3,5-tris(2,6-dimethyl-4-tert-butyl-3-hydroxybenzyl) isocyanurate,
1,3,5-tris(3,5-di-tert-butyl-4-hydroxybenzyl)-s-triazine-2,4,6(1H,3H,5H)trione,
1,3,5-tris[2-[3-(3,5-di-tert-butyl-4-hydroxyphenyl)propionyloxy]ethyl]-s-triazine-2,4,6(1H,3H,5H)trione,
1,3,5-tris(3,5-di-tert-butyl-4-hydroxyphenylmethyl)-2,4,6-trimethylbenzene,
4,4'-thiobis[2-tert-butyl-5-methylphenol], and
2,2'-methylenebis(6-cyclohexyl-4-methylphenol).

**10.** Composition according to any of Claims 1 to 9, where component F is one or more compounds selected from the group consisting of
tris(nonylphenyl) phosphite,
tris(z,4-tert-butylphenyl) phosphite,
pentaerythritol bis(stearyl phosphite),
pentaerythritol bis(2,6-di-tert-butylphenol phosphite),
tetrakis(2,4-di-tert-butylphenyl) [1,1'-biphenyl]-4,4'-diyl bisphosphonite,
dilauryl thiodipropionate, and
distearyl thiodipropionate.

**11.** Use of the compositions according to Claim 1 to 10 for producing mouldings.

**12.** Moulding comprising a composition according to any of Claims 1 to 10.

**13.** Moulding according to Claim 12, **characterized in that** the moulding is part of a motor vehicle, rail vehicle, aircraft or water craft or is a sheet, a profile or housing parts of any kind.

## Revendications

**1.** Compositions contenant

A) un polycarbonate aromatique et/ou un polyestercarbonate aromatique,
B) un polymérisat greffé pouvant être obtenu par co-précipitation d'un mélange d'au moins deux dispersions de polymérisats greffés B.1 et B2, **caractérisé en ce que** la préparation du composant polymérisat greffé B. 1 s'effectue avec utilisation d'au moins un système redox en tant qu'amorceur et **en ce que** la préparation du composant polymérisat greffé B.2 s'effectue avec utilisation d'au moins un composé persulfate en tant qu'amorceur, et
C) 0 à 40 parties en poids de (co)polymérisat vinylique et/ou poly(alkylène-téréphtalate),
E) un antioxydant phénolique,
les compositions étant exemptes de stabilisants (composant E) et d'agents synergiques (composant F) qui contiennent des groupes fonctionnels acides ou basiques, et
la composition contenant 0,01 à 2 parties en poids, chaque fois par rapport à la somme des parties en poids des composants A+B+C, de co-stabilisants phosphorés ou soufrés neutres, qui ne contiennent ni des groupes fonctionnels basiques ni des groupes fonctionnels acides, en tant que composant F.

**2.** Compositions selon la revendication 1, contenant

A) 10 à 99 parties en poids de polycarbonate aromatique et/ou polyestercarbonate aromatique,
B) 1 à 50 parties en poids d'un polymérisat greffé pouvant être obtenu par co-précipitation d'un mélange d'au moins deux dispersions de polymérisats greffés B.1 et B.2, **caractérisé en ce que** la préparation du composant polymérisat greffé B.1 s'effectue avec utilisation d'au moins un système redox en tant qu'amorceur et **en ce que** la préparation du composant polymérisat greffé B.2 s'effectue avec utilisation d'au moins un composé persulfate en tant qu'amorceur, et
C) 0 à 40 parties en poids de (co) polymérisat vinylique et/ou poly(alkylène-téréphtalate),
D) 0 à 50 parties en poids, par rapport à la somme des composants A+B+C, d'un agent ignifuge phosphoré,
E) 0, 005 à 1 partie en poids, par rapport à la somme des composants A+B+C, d'au moins un antioxydant phénolique,
F) 0,01 à 2 parties en poids, par rapport à la somme des composants A+B+C, de co-stabilisants phosphorés ou soufrés neutres (désignés également ci-après par agents synergiques), et
G) 0 à 50 parties en poids, par rapport à la somme des composants A+B+C, d'additifs.

**3.** Compositions selon la revendication 1 ou 2, contenant 0,02 à 0,3 partie en poids de composant E et 0,05 à 0,5 partie en poids de composant F (chaque fois par rapport à la somme des parties en poids des composants A+S+C).

**4.** Composition selon l'une quelconque des revendications 1 à 3, dans laquelle le composant B est un polymérisat greffé préparé par co-précipitation d'un mélange de deux dispersions de polymérisats greffés B.1 et B.2, B.1 et B.2 étant chacune une dispersion dans l'eau de polymère de

i) 15 à 60 % en poids d'au moins un monomère vinylique sur
ii) 85 à 40 % en poids d'une ou plusieurs bases de greffage ayant des températures de transition vitreuse < 10 °C.

**5.** Composition selon l'une quelconque des revendications 1 à 4, dans laquelle le pH du composant B présente une valeur de 3 à 9.

**6.** Composition selon l'une quelconque des revendications 1 à 5, dans laquelle la base de greffage du composant B présente une taille moyenne de particule (valeur $d_{50}$) de 0,2 à 0,4 μm.

**7.** Composition selon l'une quelconque des revendications 1 à 6, contenant 2 à 30 parties en poids (par rapport à la somme des parties en poids des composants A+B+C) d'agent ignifuge selon le composant D.

**8.** Composition selon la revendication 7, contenant en tant que composant D des composés phosphorés mono- et oligomères de formule générale (IV)

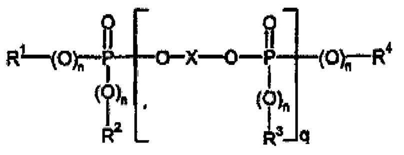

(IV)

dans laquelle

$R^1$, $R^2$, $R^3$ et $R^4$ représentent chacun, indépendamment les uns des autres, un groupe alkyle en $C_1$-$C_8$ éventuellement halogéné, un groupe cycloalkyle en $C_5$-$C_6$, aryle en $C_6$-$C_{20}$ ou aralkyle en $C_7$-$C_{12}$, éventuellement substitués chacun par alkyle et/ou halogène,
n représentent, indépendamment les uns des autres, 0 ou 1,
q représente 0 à 30 et
X représente un radical aromatique mono- ou polynucléaire ayant de 6 à 30 atomes de carbone, ou un radical aliphatique linéaire ou ramifié ayant de 2 à 30 atomes de carbone, qui peut être substitué par OH et comporter jusqu'à 8 liaisons éther.

**9.** Composition selon l'une quelconque des revendications 1 à 8, dans laquelle le composant E consiste en un ou plusieurs composés choisis dans le groupe constitué par

le 2,6-di-tert.-butylphénol, le 2,6-di-tert.-butylcrésol,
le tétrakis-[méthylène,(3,5,di,tert.-butyl-4-hydroxy-cinnamate)] méthane,
le 2,2'-méthylène-bis-(4-méthyl-6-tert.-butylphénol),
le benzénepropionate de 3,5-bis-(1,1-diméthyléthyl)-4-hydroxy-1,1'-(thiodi-2,1-éthanediyle),
le 1,1,3-tri(3-tert.-butyl-4-hydroxy-6-méthylphényl)-butane,
le 3-(3,5-di-tert.-butyl-4-hydroxyphényl)propionate d'octadécyle,
le 4,4'-butylidène-bis-(6-tert.-butyl-3-méthylphénol),
l'isocyanurate de 1,3,5-tris(2,6-diméthyl-4-tert.-butyl-3-hydroxybenzyle),
la 1,3,5-tris(3,5-di-tert.-butyl-4-hydroxybenzyl)-s-triazine-2,4,6(1H,3H,5H)trione,
la 1,3,S-tris[2- [3-(3,5-di-tert.-butyl-4-hydroxyphényl-propionyloxy]éthyl]-s-triazine-2,4,6(1H, 3H, 5H)trione,
le 1,3,5-tris(3,5-di-tert.-butyl-4-hydroxyphénylméthyl)-2,4,6-triméthylbenzène,
le 4,4'-thiobis[2-tert.-butyl-5-méthylphénol] et
le 2,2'-méthylènebis(6,cyclohexyl,4,méthylphénol).

**10.** composition selon l'une quelconque des revendications 1 à 9, dans laquelle le composant F consiste en un ou plusieurs composés choisis dans le groupe constitué par
le phosphite de tris-(nonylphényle),
le phosphite de tris(2,4-tert.-butylphényle),
le bis-(stéarylphosphite) de pentaérythritol,
le bis-(2,6-di-tert.-butylphénolphosphite) de pentaérythritol,
le bisphosphonite de tétrakis(2,4-di-tert.-butylphényl) [1,1'-biphényl]-4,4',diyle,
le thiodipropionate de dilauryle et
le thiodipropionate de distéaryle.

**11.** Utilisation des compositions selon l'une quelconque des revendications 1 à 10, pour la production de corps moulés.

**12.** Corps moulé, contenant une composition selon l'une quelconque des revendications 1 à 10.

**13.** Corps moulé selon la revendication 12, **caractérisé en ce que** le corps moulé est une pièce d'un véhicule automobile, véhicule sur rails, aéronef ou bateau ou un film, un profilé ou des éléments de carter de tout type.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1170141 A
- DE 1810993 A
- DE 2259565 A
- DE 2329548 A
- EP 0704488 A
- DE 2818679 A
- EP 0900827 A
- WO 9901489 A
- WO 2004050765 A
- DE 1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE OS3704657 A
- DE OS3704655 A
- DE OS3631540 A
- DE OS3631539 A
- DE 2035390 A
- US 3644574 A
- DE 2248242 A
- GB PS1409275 A
- EP 867463 A
- DE 2407674 A
- DE 2407776 A
- DE 2715932 A
- DE 1900270 A
- US PS3692744 A
- EP 0363608 A
- EP 0640655 A
- WO 0000541 A
- WO 0118105 A
- EP A A
- EP 394779 A


### In der Beschreibung aufgeführte Nicht-Patentliteratur


- **B.S. PATTY ; L. NOVAK ; H. PHAN.** Thermal and hydrolytic stability of polycarbonate/acrylonitrile-butadiene-styrene based blends. *Advances in Plastic Components, Processes and Technologies,* 2005, 145-151
- **W. SCHOLTAN ; H. LANGE.** *Kolloid-Z. und Z. Polymere,* 1972, vol. 250, 782-796
- Enzyklopädie der Technischen Chemie. 1980, vol. 19, 280 ff
- Ullmanns Enzyklopädie der technischen Chemie. 1979, vol. 18, 301 ff
- **HOUBEN-WEYL.** *Methoden der organischen Chemie,* vol. 12/1, 43
- *METHODEN DER ORGANISCHEN CHEMIE,* vol. 6, 177